# EUROPEAN PATENT APPLICATION

(11) **EP 2 293 197 A1**
(43) Date of publication of application: **09.03.2011**
(21) Application number: 09754372.2
(22) Date of filing: 09.03.2009
(51) Int. Cl.: G06F 13/00

(54) **COMMUNICATION TERMINAL DEVICE, COMMUNICATION CONTROL METHOD AND COMMUNICATION CONTROL PROGRAM**

(30) Priority: 28.05.2008 JP 2008139776
(71) Applicant: Panasonic Corporation, Kadoma-shi Osaka 571-8501 (JP)
(72) Inventor: TAKEI, Yuko, Osaka 540-6207 (JP); KITAMURA, Yoshihiko, Osaka 540-6207 (JP)
(74) Representative: Grünecker, Kinkeldey, Stockmair & Schwanhäusser Anwaltssozietät
(86) International application number: PCT/JP2009/001036
(87) International publication number: WO 2009/144862

(57) **Abstract**

A user invited to a session can see the content of the conversation exchanged in the session before participating in the session, so that he/she can easily decide whether or not to join the session. There are provided an invitation request transmitting section 202 which transmits an invitation request to invite another station user to a communication session, an invitation acceptance transmitting section 206 which transmits an invitation acceptance response according to an input operation of a user of its own station when an invitation request is received from another station, a digest request transmitting section 206 which transmits a digest request when predetermined conditions are satisfied for the invitation request received from another station, a digest information transmitting section 210 which creates and transmits the digest information when the digest request from another station is received, and a digest information output section 213 which notifies the user of its own station of the content of the digest information received from another station.

## Description

### Technical Field

The present invention relates to a communication terminal device, a communication control method, and a communication control program used to perform group communication between a plurality of communication terminals which can communicate with each other through a network.

### Background Art

As a structure in which the information transmitted from a certain terminal of terminals participating in a session (mutually communicating group) formed by a plurality of communication terminals is automatically shared between terminals participating in the session, there are some structures such as chat or instant messaging. In these services, if a terminal participating in the session transmits a message to the session address, the message is distributed to all terminals participating in the session through a server.

In such conventional services, a user who newly joins a session cannot see the content of the conversation exchanged before participation. Accordingly, there is a problem that the user could not join in the conversation immediately. Techniques for solving this problem are disclosed in Patent Citations 1, 2, and 3, for example.

According to the technique disclosed in Patent Citation 1, a log file of a chat is prepared. When an access request to the log file is received, the messages of the chat are read and transmitted to the terminal if an address of a requesting terminal is access-permitted.

According to the technique disclosed in Patent Citation 2, when another new conversation relevant to a certain conversation is set up during participation in the conversation, pair lists of an identifier of the new conversation, an identifier of the relevant conversation to the conversation, and a time stamp are created and the information is transmitted to the terminal of an invitee. The terminal of the invitee accesses the conversation relevant to the invited conversation on the basis of the transmitted information.

That is, according to the techniques disclosed in Patent Citations 1 and 2, a user who newly joins a session can see the content of the conversation exchanged before participation. Accordingly, the user can join the conversation comparatively smoothly after session participation.

According to the technique disclosed in Patent Citation 3, if a word is detected which fits registered conditions which the user registered in advance, the word is transmitted to the terminal of the user. This urges the user to join a chat in which the content, in which the user is interested, is being discussed.

That is, according to the technique disclosed in Patent Citation 3, a user who joins a session cannot see the content of the conversation exchanged before joining but can participate in the session after getting to know that at least content, in which the user is interested, is being discussed. Accordingly, the user can join the conversation comparatively smoothly after session participation.
Patent Citation 1: JP-2007-108953A
Patent Citation 2: US2007/0033250A
Patent Citation 3: JP-2000-40162A

### Disclosure of Invention

### Technical Problem

In a chat and the like on the Web, a user participates by designating a known URI (Uniform Resource Identifier) to themselves. In instant messaging and the like, however, not only a session which adopts such a participation form but also a session, in which another user can join if the session creator or a session participant invites the other user and the invited user returns a response, is provided.

For example, in a system which supports IMPS (Instant Messaging and Presence Service) whose specifications are published by OMA (Open Mobile Alliance), a session is formed in such a manner that if "InviteRequest" is transmitted from a terminal on the inviting side, an IM server which has received it transmits "InviteUserRequest" to a terminal on the invited side, and in response to this, the terminal of the invited side returns "InviteUserResponse". Moreover, in a system which supports SIP/SIMPLE IM (Instant Messaging), the session is formed in such a manner that if "SIP INVITE" is transmitted from a terminal on the inviting side, an IMS network which has received it transmits "SIP INVITE" to a terminal on the invited side, and in response to this, the terminal of the invited side returns "200 OK".

In conventional techniques, when a certain user invites another user to a session in such a system, the invited user should decide whether or not to accept or refuse the invitation with no information regarding the content of the conversation exchanged in the session and return a response. For this reason, invited users have hesitated about this decision.

If the techniques disclosed in Patent Citations 1 to 3 are adopted, it is possible to know the content, which has been discussed in a session in the past, after joining the session, or to know the presence of a session, which includes a keyword that a corresponding user registered on a server in advance, before joining in the session. However, when an invitation is received, the content discussed in the session in the past cannot be known before joining therein. Moreover, in the conventional techniques, extension of server functions, such as a session history saving function, is also necessary.

In order to solve such a problem, it is an object of the present invention to provide a system capable of allowing a user invited to a session to decide whether or not to join in the session by simply checking the content of the conversation exchanged in the session before joining the session.

### Technical Solution

As an aspect of a communication terminal device according to the present invention, there is provided a communication terminal device capable of communicating with one or more communication terminals, comprising: a communication section which is adapted to transmit and receive a communication with the communication terminal; an invitation request transmitting section which is adapted to transmit an invitation request to attend a communication session to the communication terminal through the communication section; and a digest information transmitting section which is adapted to create digest information including a message relevant to the communication session and to transmit the created digest information to the communication terminal through the communication section when the communication section receives a digest request from the communication terminal after transmitting the invitation request.

As an aspect of a communication terminal device according to the present invention, there is provided a communication terminal device capable of communicating with one or more communication terminals, comprising: a communication section which is adapted to transmit and receive a communication with the communication terminal; an input section which is adapted to detect an input operation from a user of the communication terminal device regarding whether or not to accept an invitation request when the invitation request is received from the communication terminal; and a digest request transmitting section which is adapted to transmit a digest request to the communication terminal through the communication section when the input section does not detect an input from the user within a predetermined time after the invitation request is received.

According to the communication terminal device described above, a user who newly joins in a specific communication session, that is, a user of a second terminal (another communication terminal device: equivalent to another station or corresponding station) which received an invitation request from a user of a first terminal (one communication terminal device: equivalent to corresponding station or another station) of an invitation source can check the content of the digest information when deciding whether or not to accept the invitation. As a result, the user can easily determine whether or not to accept the invitation. That is, if the user of the second terminal which has received the invitation request delays an input operation for invitation acceptance, the digest request transmitting section of the second terminal transmits a digest request. If this digest request is received, the digest information transmitting section of the first terminal creates and transmits the digest information. The digest information output section of the second terminal receives the digest information transmitted from the first terminal and notifies the user of the second terminal of the content (for example, displays it or outputs it by sound).

As an aspect of a communication terminal device according to the present invention, the communication section receives digest information corresponding to the digest request, and the digest request transmitting section re-transmits a digest request to the communication terminal through the communication section when the input section does not detect an input from the user within a predetermined time after receiving the digest information.

According to the communication terminal device described above, a digest request addressed to the first terminal of the invitation source from the second terminal which has received the invitation request can be repeatedly transmitted a plural number of times. As a result, since the user of the second terminal can receive a plurality of digest information items in the order, the user of the second terminal can obtain only the amount of information necessary which is useful in deciding whether or not to accept the invitation. In addition, an upper limit may be set for the number of transmissions of a digest request.

As an aspect of a communication terminal device according to the present invention, when the communication section receives the digest request a plural number of times, the digest information transmitting section transmits second digest information, which has different content from first digest information that is the already transmitted digest information, to the communication terminal through the communication section.

According to the communication terminal device described above, if the first terminal which has transmitted the invitation request receives a digest request from the second terminal of the invitation request destination repeatedly a plural number of times, the first terminal transmits the second digest information the content of which is different from the first digest information previously transmitted. As a result, since the user of the second terminal can receive a plurality of digest information items in the order, the user of the second terminal can obtain only the amount of information necessary which is useful in deciding whether or not to accept the invitation.

As an aspect of a communication terminal device according to the present invention, the digest request transmitting section determines whether or not to re-transmit the digest request according to the size or the content of digest information already received from the communication terminal.

According to the communication terminal device described above, an appropriate operation depending on the situation is possible. For example, when the size of the received digest information is large, it takes time for the user to see the entire content. In this case, it is preferable to change the predetermined time so as to be almost proportional to the size. Moreover, for example, in the case where the rate of information, which has been displayed on the indicator, among the received digest information items exceeds a predetermined rate or in a case where the rate of a message, which is focused (or through which a cursor has passed) on the indicator, among the received digest information items exceeds a predetermined rate, transmitting the second or subsequent digest request may also be considered.

As an aspect of a communication terminal device according to the present invention, the digest information transmitting section creates the digest information by extracting each message information item, which is included in a communication history of the communication session, on the basis of the content of an invitation message included in the invitation request.

According to the communication terminal device described above, the user of the terminal of the invitee can understand the outline of a session from the content of the received invitation message before participating in the session. That is, the user of an invitation source transmits an invitation request, to which a character string related to the outline of a corresponding communication session is added as an invitation message, in many cases, and the content of the invitation message is useful for determination of a user of an invitee in many cases. Therefore, the terminal of the invitation source searches for a message (for example, a message with a large number of appearances of the same word), which is deeply related to the word included in the transmitted invitation message, from a communication history of the corresponding communication session and transmits it as the digest information.

As an aspect of a communication terminal device according to the present invention, the digest information transmitting section creates the digest information on the basis of the content of a message received in the past, which is associated with the communication terminal user.

According to the communication terminal device described above, a digest which covers the information that the invited user wants to know can be created. For example, in many cases, the content that an invited user wants to talk with an inviting user is frequently included in messages (message through a session, the content of a received mail, and the like) that the inviting user received from the invited user in the past. Accordingly, it can be said that the preferences of the invited user are reflected. Therefore, for example, a keyword with a high frequency of occurrence is extracted from a group of messages received from the invitee in the past and a message, which includes the keyword, in the history information regarding messages exchanged in the past in the corresponding communication session is preferentially selected as the digest information.

As an aspect of a communication terminal device according to the present invention, the digest request transmitting section adds a keyword, which is related to the preferences of the communication terminal device user, to the digest request.

According to the communication terminal device described above, it is possible to create the digest information reflecting not only the preferences of the invited user that the inviting user knows but also the preferences of the invited user that the inviting user does not know. For the keyword included in the digest request transmitted from the terminal of the invitee, relevance to the user's preferences can be increased by adopting a word with a large number of appearances (the more recent, the more weighted) within the titles of mail items transmitted and received in the past or a word with a large number of appearances within the pastime information input in advance by the user or messages (including a message and a mail through the session) transmitted to the invitation source in the past, for example.

As an aspect of a communication terminal device according to the present invention, the communication terminal device includes a session history storage section for storing history information regarding the communication session, and the invitation request transmitting section compares the communication session with the session history storage section on the basis of history information regarding a communication relevant to the communication session, determines whether or not a member of the communication session and the communication terminal are included in the same session stored in the session history storage section, and transmits participant information regarding a member, who is not included, to the communication terminal through the communication section if the member is not included.

According to the communication terminal device described above, when the user of the terminal of the invitee which has received an invitation request decides whether or not to accept the invitation, the useful information for determination can be obtained. That is, when deciding whether or not to join in a specific communication session, for example, whether or not all members already participating in the corresponding communication session are their acquaintances can be one criterion of determination. Accordingly, when a specific person, who has not participated as a member in a communication session in which the user participated in the past, is included as a member of a current communication session to be invited, the participant information indicating that the person is a member is sent to the corresponding invited user. As a result, the user who has received this can see whether it is a communication session in which a person whom the user does not know participates as a member.

As an aspect of a communication terminal device according to the present invention, the communication terminal device includes a profile information storage section which is adapted to hold profile information related to the preferences of a user of the communication terminal device is provided, and a history request transmitting section which transmits a history request, to which the profile information held in the profile information storage section is added, through the communication section is further provided.

According to the communication terminal device described above, the user of the terminal who has been invited can acquire the history information that the user wants to know without causing unnecessary traffic before participating in the session. Regarding profile information, inclusion may be considered of the information that the user registered in advance, or the information on a word appearing frequently on a Web page that the user has accessed, or in the title of transmitted or received mails, for example.

As an aspect of a communication terminal device according to the present invention, if the communication section does not receive a response regarding invitation acceptance from the communication terminal of an invitee within a predetermined time period after the invitation request transmitting section transmits the invitation request, the invitation request transmitting section transmits the digest information, which is created by the digest information transmitting section, to the communication terminal through the communication section.

According to the communication terminal device described above, the user of the terminal who has been invited can acquire the history information that the user wants to know without causing unnecessary traffic before participating in the session.

As an aspect of a communication terminal device according to the present invention, the digest information transmitting section transmits message identification information for specifying a message, which is related to the digest information to be transmitted, in a state added to the digest information.

According to the communication terminal device described above, the user of the terminal who has been invited can easily acquire the further information that the user needs on the basis of the received digest information before joining the session.

As an aspect of a communication terminal device according to the present invention, the communication terminal device further includes: a message storage section for holding a message of a history communicated in the communication session and message identification information corresponding to the message; and a history information transmitting section which is adapted to extract a message, which corresponds to the second message identification information added to a history information request, from messages of the history held in the message storage section and transmit the message to the communication terminal when the communication section receives the history information request from the communication terminal.

According to the communication terminal device described above, the user of the terminal who has been invited can easily acquire the further information that the user needs on the basis of the received digest information before participating in the session. For example, if a specific message of the digest information is set to a selection state in a state where the digest information already received is displayed on the display screen of the terminal which received the invitation, the second message identification information indicating messages located before and after the message, for example, is created on the basis of the first message identification information indicating the message in the selection state, and a history information request to which the second message identification information is added is transmitted to the terminal address of the invitation source. As a result, the user can receive a necessary message.

As an aspect of a communication terminal device according to the present invention, the digest storage section sets a message ID, which is added to a message communicated in the session, as the message identification information.

According to the communication terminal device described above, the message identification information can be easily created without adding a new function.

As an aspect of a communication control method according to the present invention, there is provided a communication control method for inviting one or more communication terminals to a communication session, comprising: transmitting an invitation request to attend the communication session to the communication terminal; creating digest information including a message, which is related to the communication session, when a digest request is received from the communication terminal after transmitting the invitation request; and transmitting the created digest information to the communication terminal.

As an aspect of a communication control method according to the present invention, there is provided a communication control method for receiving an invitation to attend a communication session from a certain communication terminal, comprising: receiving an invitation request to attend the communication session from the communication terminal; detecting an input operation regarding whether or not to accept the received invitation request; and transmitting a digest request to the communication terminal when the input operation is not detected within a predetermined time after the invitation request is received.

Similar to the case of using the communication terminal device described above, according to the above-described communication control method, a user who newly joins in a specific communication session, that is, the user of the second communication terminal which received an invitation request from the user of the first communication terminal of the invitation source can check the content of the digest information when deciding whether or not to accept the invitation. As a result, it becomes easy to determine whether or not to accept the invitation.

As an aspect of a communication control program according to the present invention , there is provided a program to execute each step in the communication control method.

Similar to the case of using the communication terminal device described above, by causing a predetermined computer to execute the above-described communication control program in order to control the communication, a user who newly joins in a specific communication session, that is, the user of the second communication terminal which received an invitation request from the user of the first communication terminal of the invitation source can check the content of the digest information when deciding whether or not to accept the invitation. As a result, a decision regarding whether or not to accept the invitation becomes easy.

### Advantageous Effects of Invention

According to the communication terminal device, the communication control method, and the communication control program related to the present invention, the information required for a user of a terminal of a side invited to a session to decide whether or not to join the session, that is, the information regarding the content discussed in the session can be automatically provided to the terminal of the invited side before session participation.

### Brief Description of Drawings

Fig. 1 is a block diagram showing an example of the configuration of a communication system using a communication terminal device of an embodiment.
Fig. 2 is a sequence diagram showing the outline of operation when one terminal invites another terminal to a communication session in the communication system shown in Fig. 1.
Fig. 3 is a sequence diagram showing the more specific content of the operation shown in Fig. 2.
Fig. 4 is a block diagram showing the configuration of main components of one communication terminal device used in the communication system shown in Fig. 1.
Fig. 5 is a flow chart showing an operation of an invitation source when inviting a user of another terminal.
Fig. 6 is a flow chart showing an operation of a terminal of an invitee.
Fig. 7 is a sequence diagram showing the outline of operation when one terminal invites another terminal to a communication session in the communication system shown in Fig. 1.

### Explanation of Reference Signs

- 101,: 102, 103, 104: terminal
- 110:: session
- 201:: user input section
- 202:: invitation request creating section
- 203:: contact list
- 204:: signal transmitting section
- 205:: terminal presence information holding section
- 206:: invitation response creating section
- 207:: message creating section
- 208:: signal receiving section
- 209:: received information analyzing section
- 210:: digest information creating section
- 211:: digest information analyzing section
- 212:: message history holding section
- 213:: display control section
- 214:: indicator

### Best Mode for Carrying Out Invention

Hereinafter, embodiments of the present invention will be described with reference to the drawings. Moreover, in the embodiments described below, a case is assumed in which an IM system, which supports SIP/SIMPLE IM, the specification of which is opened by OMA, is adopted.

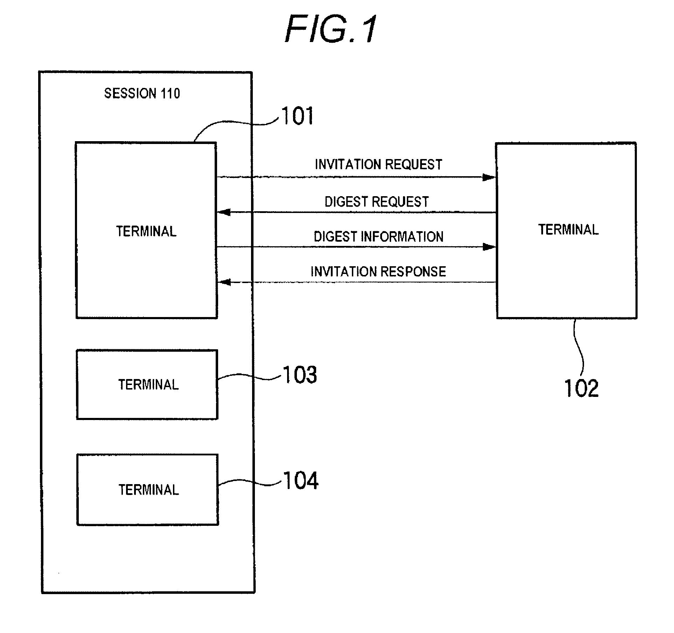

In this example, a communication system shown in Fig. 1 is assumed. That is, the case is assumed in which a plurality of terminals (clients) 101 to 104 that can communicate with each other through a predetermined communication network exists and the user of the terminal 101 invites one terminal 102, which has not joined a session 110 yet, to the session 110 in a state where the terminals 101, 103, and 104 are already participating in the session 110 of communication through which the communication content can be shared. Undoubtedly, the user of the terminal 103 or the terminal 104 other than the terminal 101 may also invite the user of the terminal 102. By this session 110, if one terminal of the terminals 101, 103, and 104 transmits a message to the session address, this message is distributed to all terminals 101, 103, and 104. Accordingly, the terminals 101, 103, and 104 participating in the session 110 can share the same communication content (message).

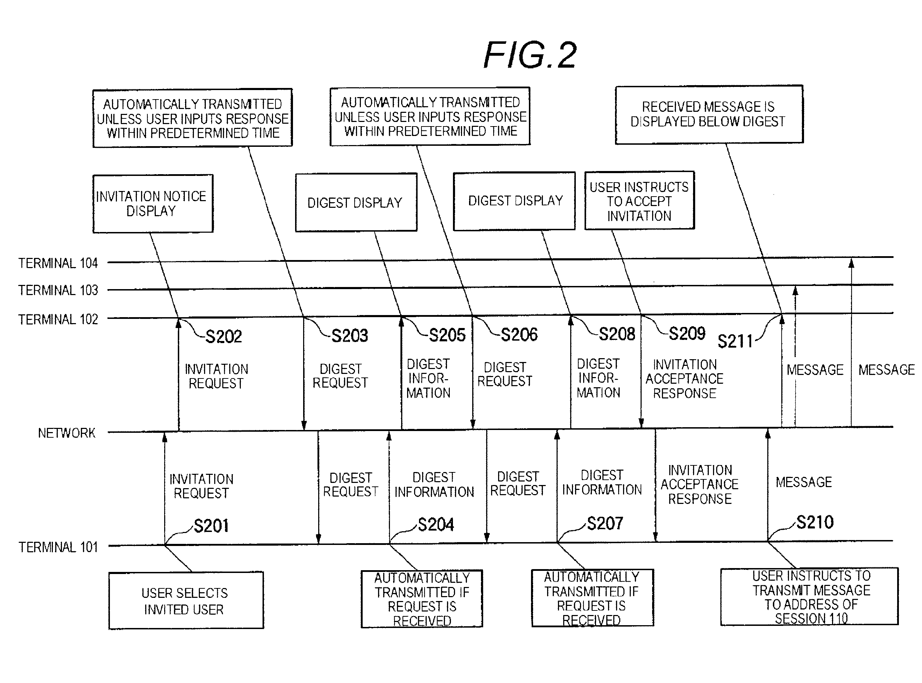

The outline of an operation sequence when the terminal 101 invites the terminal 102 in the communication system shown in Fig. 1 is shown in Fig. 2.

As shown in Fig. 2, if the user of the terminal 101 inputs an instruction to the terminal 101 in order to invite the user of the terminal 102, the terminal 101 transmits an invitation request to the address of the terminal 102 (S201). If the user does not input a response to the invitation, the terminal 102 which has received the invitation request transmits a digest request to the invitation request transmission source every predetermined time (S203 and S206), and the digest information transmitted according to this request is displayed on the indicator of the terminal (S205 and S208). Then, if the user of the terminal 102 inputs an instruction to the terminal 102 so as to accept or refuse the invitation, the terminal 102 returns an invitation response according to this input (S209). Thus, participation of the terminal 102 in the session 110 is completed, and then each terminal participating in the session 110 is notified that a new user has joined.

The digest information transmitted from the terminal of the invitation source which has received the digest request is the information extracted from a history of the session held in the invitation source terminal 101 (information regarding a message group received in the past to the session address). Generally, an IM client terminal not only displays the newest message received but also supports a function of displaying messages side by side in the order of arrival or displaying messages exchanged in the past in the session under participation and a session that the terminal participated in the past by a scroll operation and the like of the display content according to the user instruction. In order to realize this, a session history which stores a message received in a session is held in the terminal. The digest information is created using the history as a source.

A specific example of the digest information used in the present embodiment is as follows.

### (Specific example A1)

The digest information that the terminal 101 transmits first after invitation request transmission is the information obtained by extracting the newest message of each participant from the history of the session 110, which is held in the terminal 101, for all participants. In a message addressed to the session, the information indicating a transmission source, such as a public URI (Uniform Resource Identifier), is included. Accordingly, the terminal 101 specifies the transmission source of the message on the basis of the information. In addition, although the newest message is extracted for each participant in this example, the message with a largest size may be extracted for each participant in order to inform an invited user of a more detailed statement tendency.

The digest information that the terminal 101 transmits for the second and subsequent time after invitation request transmission is assumed to be one of the following. (a) The newest message of each participant extracted from messages in the history of the session 110, which have not yet been transmitted as the digest information, for all participants. (b) The message whose transmission time is nearest to that of a message already transmitted as a digest among messages in the history of the session 110 which have not yet been transmitted as the digest information. (c) A message in a history transmitted between a message already transmitted and another message already transmitted among messages in the history of the session 110 which have not yet been transmitted as the digest information.

The terminal 102 receives and displays the received digest information and accordingly, the invited user can decide whether or not to join the session after getting to know that the invited session is formed by users with which kind of statement tendency and which kind of topic is being covered in the invited session.

### (Specific example A2)

The digest information that the terminal 101 first transmits after an invitation request transmission is a message including some or all of a phrase that the user selects when an invitation message is created in the terminal 101. In a normal IM system, when inviting a user, a short text sentence called an invitation message is input by a user, and this is transmitted to a terminal of an invitee together with an invitation request. When inputting the invitation message, a phrase included in the history of the session is displayed more preferentially as a phrase displayed as a conversion candidate on the indicator. When a user selects a phrase included in the history of the session, the terminal 101 extracts a message including the phrase or a part of the phrase as the digest information from the history of the session 110. In addition, when the user does not select any phrase included in the history of the session, the information mentioned as another example is transmitted. Moreover, when the total size of a message extracted as the digest information is larger than a predetermined amount, a part of the extracted message may be included in the digest information transmitted for the second or subsequent time without including it in the digest information transmitted first.

The digest information that the terminal 101 transmits for the second and subsequent time after invitation request transmission is assumed to be one of the following. (a) A message which has not been transmitted in first digest transmission while being extracted as the digest information. (b) A message, which includes a synonym of a word included in a phrase selected from conversion candidates, extracted from the history of the session 110 when a user inputs an invitation message. (c) The message whose transmission time is nearest to that of a message already transmitted as a digest among messages in the history of the session 110 which have not yet been transmitted as the digest information. (d) A message transmitted between a message already transmitted and another message already transmitted among messages in the history of the session 110 which have not yet been transmitted as the digest information.

The terminal 102 receives and displays the above-described digest information and accordingly, the invited user can decide whether or not to join the session after getting to know which kind of theme is discussed in the invited session. The invitation message is an explanatory note for inviting a user, which is intentionally created by an inviting user, and the content of the session is correctly described in many cases. Accordingly, a possibility that a digest indicating the content of the session clearly will be included is high rather than simply extracting a message preferentially from messages including a word with a large number of appearances in the session history.

Moreover, when a word selected by the user of the terminal 101 of the invitation source does not exist, it is preferentially extracted from a message, which includes a word with a large number of appearances, in the session history and this is transmitted as the digest information.

### (Specific example A3)

The digest information that the terminal 101 transmits first after invitation request is a message including a word (keyword) included in the digest request. In this example, the case is assumed in which the terminal 102 which has received an invitation request receives the information, in which the user of the terminal is interested, together with a digest request. For example, the interesting information is keywords, such as category names of pastime ("railroad", "piano", "golf', and the like), topic names ("global warming", "Upper House election", and the like), work names (document titles, a film titles, and the like), area names ("Shibuya", "Shimokitazawa", and the like), or other proper nouns (personal name and group name). The user of the terminal 102 may input them to the terminal 102 actively in advance, or the terminal 102 may set them automatically from the location of itself, operation history of the user, and the like.

The digest information that the terminal 101 transmits for the second and subsequent time after invitation request transmission is assumed to be one of the following. (a) The message whose transmission time is nearest to that of a message already transmitted as a digest among messages in the history of the session 110 which have not yet been transmitted as the digest information. (b) A message transmitted between a message already transmitted and another message already transmitted among messages in the history of the session 110 which have not yet been transmitted as the digest information.

The terminal 102 receives and displays the above-described digest information and accordingly, the invited user can decide whether or not to join the session after getting to know whether or not a topic, in which the user is interested, is treated in the invited session and the specific content exchanged regarding the topic.

For a keyword included in the digest request transmitted from the terminal 102 of the invitee, for example, a result obtained by automatically detecting words with a large number of appearances (the more recent, the more weighted) within the titles of transmitted and received mails, which are present as a history, may be assigned, or it is possible to assign a predetermined number of words extracted from words with a large number of appearances within the pastime information input in advance by the user or messages (including a message and a mail through the session) transmitted to the invitation source in the past. In this way, it is possible to create a digest reflecting the preferences of an invited user that an inviting user does not know.

When a keyword is not included in a digest request that the terminal 101 of the invitation source received, it is also possible to detect a keyword corresponding to the preferences of the invited user at the side of the terminal 101 of the invitation source and extract a message including the keyword preferentially. For example, a word with a large number of appearances within messages (including a message and a mail through the session) that the invitation source received from the invited user in the past or the user's pastime information (expanded from the presence information or the like) stored in the terminal may be used as the keyword. That is, in messages transmitted from the invited user to the inviting user in the past, the content about which the invited user wants to talk with the inviting user is included a lot in many cases. Accordingly, it is possible to create a digest, which covers the information that the invited user wants to know, rather than simply extracting a message preferentially from messages including a word with a large number of appearances in the session history.

### (Specific example A4)

The digest information that the terminal 101 transmits first after invitation request is the information obtained by extracting a message, every a predetermined number of messages, from the history of the session 110 held in the terminal 101. In addition, the digest information transmitted for the second and subsequent time is the information obtained by extracting one or more messages, which include a candidate message transmitted at a time nearest to a specific message focused (noted or selected as a candidate) on the indicator of the terminal 102 of the invitee continuously for a predetermined time or more, among messages within the history of the session 110 which have not yet been transmitted as the digest information.

In order that the terminal 101 can specify the candidate message to be extracted, the information for specifying this is included in the digest request transmitted from the terminal 102. Preferably, the information is identification information (message ID) of a message displayed on the indicator of the terminal 102 or identification information of a message displayed on the indicator of the terminal 102 and identification information of messages received therebefore and thereafter, for example. The former has an advantage in that the amount of information that the terminal 102 transmits is small, and the latter has an advantage in that the terminal 101 does not need to hold the information indicating whether or not transmission of a certain message has been completed. The terminal 102 receives and displays the received digest information and accordingly, the invited user can decide whether or not to join the session after seeing the details regarding a portion, about which the user wants to know the content of exchanges in more detail, among the displayed digest information items.

In addition, the digest information transmitted first after invitation request may be a message extracted in the methods described in the specific examples A1, A2, and A3 or other methods. Moreover, in this example, depending on the transmission interval of a digest, the amount of messages transmitted at one time, and the like, the digest information newly received is sequentially displayed between messages from a message currently focused to the arrival target even if the user tries to reach a certain target message by scroll operation. As a result, a phenomenon occurs in which the user cannot reach the arrival target no matter how the user continues scrolling. A specific value of the predetermined time is set so that such a phenomenon does not occur.

### (Specific example A5)

As a modification of the specific example A4, the information regarding the scroll direction immediately before arriving at the currently focused position is also included in the information which is transmitted from the terminal 102 in a state of being included in the digest request. Accordingly, on the basis of the information on the scroll direction received together with the digest request, the terminal 101 determines whether the user of the terminal 102 of the invitee wants to see a message received before the message existing at the currently focused position or wants to see a message transmitted thereafter. If the determination result is a message transmitted therebefore, one or more messages, which include the message transmitted at the nearest time before the message focused on the terminal 102, extracted from messages within the history of the session 110 which have not yet been transmitted as the digest information, is set as the digest information to be transmitted. If a determination result is a message transmitted thereafter, one or more messages, which include a message transmitted at a nearest time after the message focused on the terminal 102, extracted from messages within the history of the session 110 which have not yet been transmitted as the digest information, is set as the digest information to be transmitted. The terminal 102 receives and displays the above-described digest information and accordingly, the invited user can decide whether or not to join the session after seeing the details regarding a portion, about which the user wants to know the more detailed content of exchanges, among the displayed digest information items.

In addition, at least in the specific examples A4 and A5, when displaying the received digest information on the indicator, messages included in the digest information are not displayed in the order of reception of the digest information but are displayed according to the order in which the messages were transmitted toward the session in the past.

Moreover, although the case of transmitting the digest information as a response to digest request has been described in the above explanation, negotiation regarding transmission and reception of a digest between the invitation request and the provisional response to this may be performed and then the terminal 101 may transmit the digest information at predetermined intervals or at intervals corresponding to the size of the digest information to be transmitted without waiting for the digest request from the terminal 102.

Meanwhile, regarding the conditions in which the terminal 102 of the invitee transmits a digest request, the case is adopted in which an input operation of the user of the terminal 102 of the invitee, which is for deciding whether or not to accept the invitation, is not detected for a predetermined time or more after receiving the invitation request. However, the conditions may be changed as in the examples described below.

### (Specific example B1)

When a user does not input a response to an invitation for a period of time, which is approximately proportional to the size (for example, the amount of information) of the digest information received as a response to a digest request, after transmitting the digest request, a further digest request is transmitted. That is, since the period of time until the invited user finishes reading the content of the already received digest information is considered to be approximately proportional to the size of the received digest information, this is effective in keeping constant the period of time for which the user waits for the next new information after finishing reading the already acquired information.

### (Specific example B2)

When the user of the terminal 102 does not input a response to an invitation even if the rate of the information, which has been displayed on the indicator of the terminal 102, among the digest information items that the terminal 102 of the invitee already received exceeds a predetermined rate, a further digest request is transmitted. For example, in the case of a terminal which has an indicator with a narrow display area like a mobile phone, it is possible to determine whether or not a region of the corresponding information has been displayed by scroll operation and the like on the screen and accordingly, it is thought that the displayed information and the information read by the user are in nearly corresponding relationship. Therefore, this is effective in keeping constant the period of time for which the user waits for the next new information after finishing reading the already acquired information.

### (Specific example B3)

When a user does not input a response to an invitation even if the rate of a message, which is focused (or through which a cursor has passed) on the indicator of the terminal 102, among the digest information items that the terminal 102 of the invitee already received exceeds a predetermined rate, a further digest request is transmitted. Therefore, for example, even when a device is used which has an indicator with a large display area and in which it is difficult to determine whether or not the user has read the information only by display, this is effective in keeping constant the period of time for which the user awaits the new information after finishing reading the already acquired information.

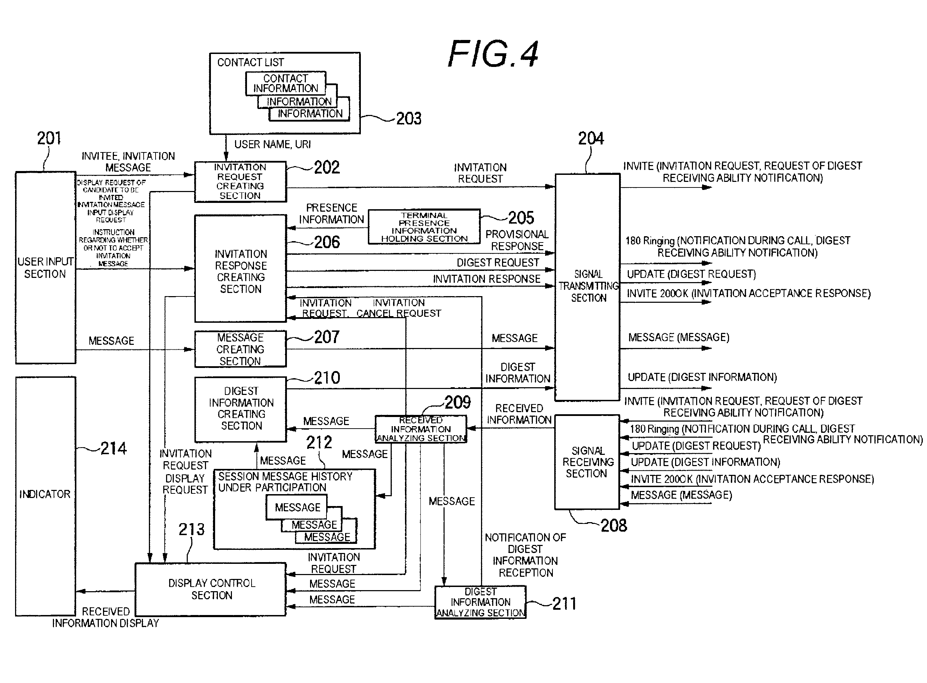

An example of the configuration of main components of one communication terminal device, which can be used as each of the terminals 101 to 104 in the communication system shown in Fig. 1, is shown in Fig. 4. This communication terminal device may be realized as a mobile phone, a personal digital assistant (PDA), or a personal computer, for example.

Referring to Fig. 4, the communication terminal device includes a user input section 201, an invitation request creating section 202, a contact list 203, a signal transmitting section 204, a terminal presence information holding section 205, an invitation response creating section 206, a message creating section 207, a signal receiving section 208, a received information analyzing section 209, a digest information creating section 210, a digest information analyzing section 211, a message history holding section 212, a display control section 213, and an indicator 214. Basic functions of these elements are as follows.

The user input section 201 reads a user's button operation or the like and creates various kinds of instructions or information. For example, information for designating an invitee, an invitation message added to an invitation request, an instruction regarding whether or not to accept an invitation, a message to be transmitted, and the like are input from the user input section 201.

The invitation request creating section 202 creates an invitation request according to the instruction from the user input section 201 or whenever it is detected that predetermined conditions have been satisfied. In addition, the invitation request creating section 202 requests the display control section 213 to display a candidate to be invited or requests display regarding an invitation message input.

The contact list 203 holds as a contact list, for example, the information including user names or URI of various station users, which are registered in advance by user's input operation and the like.

The signal transmitting section 204 transmits each signal output from the invitation request creating section 202, the invitation response creating section 206, and the message creating section 207 to a communication network of a connection destination as various signals adapted to a predetermined communication protocol. In this example, as signals that the signal transmitting section 204 transmit, there are "INVITE (invitation request, digest receiving ability notification request)", "180 Ringing (notification during a call, digest receiving ability notification)", "UPDATE (digest request)", "INVITE 200 OK (invitation acceptance response)", "MESSAGE (message)", and "UPDATE (digest information)". In addition, the content shown in the parentheses of each of the signals "INVITE", "180 Ringing", "UPDATE", "INVITE 200 OK", "MESSAGE", and "UPDATE" indicates which kind of information is carried and transmitted. That is, in the SIP standard, an INVITE method indicates "session establishment request", an UPDATE method indicates "change to a session", a MESSAGE method indicates "transmission of a text message and the like", and "180 Ringing" of a status code indicates "being called". In the present embodiment, however, they are controlled such that the special additional information shown in parentheses is transmitted in a state carried on each signal of an SIP message. In addition, the reason why the digest information is carried on the signal UPDATE is that UPDATE has a feature of being able to be transmitted before the invitation process by INVITE is completed (before 200 OK returns). In this way, it becomes possible to transmit the digest information quickly.

The terminal presence information holding section 205 holds the presence information.

The invitation response creating section 206 creates various signals according to received content of an invitation request from another station, an invitation canceling request from another station, and the presence information output from the terminal presence information holding section 205, or an instruction regarding whether or not to accept an invitation which is input from the user input section 201. Signals created by the invitation response creating section 206 include a provisional response, a digest request, an invitation response, and the like. Moreover, when an invitation request from another station has been received, the invitation response creating section 206 requests the display control section 213 to display the invitation request.

The message creating section 207 creates a message for transmission on the basis of the content of a message input from the user input section 201.

The signal receiving section 208 receives various signals from other stations, which are adapted to a predetermined communication protocol, through a communication network of a connection destination. In this example, as signals that the signal receiving section 208 receive, there are "INVITE (invitation request, digest receiving ability notification request)", "180 Ringing (notification during a call, digest receiving ability notification)", "UPDATE (digest request)", "INVITE 200 OK (invitation acceptance response)", "MESSAGE (message)", and "UPDATE (digest information)".

The received information analyzing section 209 analyzes the content of various kinds of received information output from the signal receiving section 208 and classifies it according to the type. When the received information is a message, the message is transmitted to the digest information creating section 210, the digest information analyzing section 211, the message history holding section 212, and the display control section 213. When the received information is an invitation request or an invitation canceling request, these are transmitted to the invitation response creating section 206. The invitation request is also transmitted to the display control section 213.

For each communication session in which the terminal is currently participating, the message history holding section 212 holds the information regarding messages received to the address of the session until now as a communication history.

The digest information creating section 210 creates the digest information, which is to be transmitted in response to a digest request from another station of an invitee, on the basis of the information regarding messages held in the message history holding section 212. This process is as described in the above examples A1 to A5, for example.

The digest information analyzing section 211 checks whether or not this is digest information on the basis of the message output from the received information analyzing section 209. When it is detected to be digest information, the digest information analyzing section 211 transmits a digest information reception notice to the invitation response creating section 206 and transmits the message of the digest information to the display control section 213.

The display control section 213 executes processing for displaying the required information including the received message on the indicator 214 according to the situation.

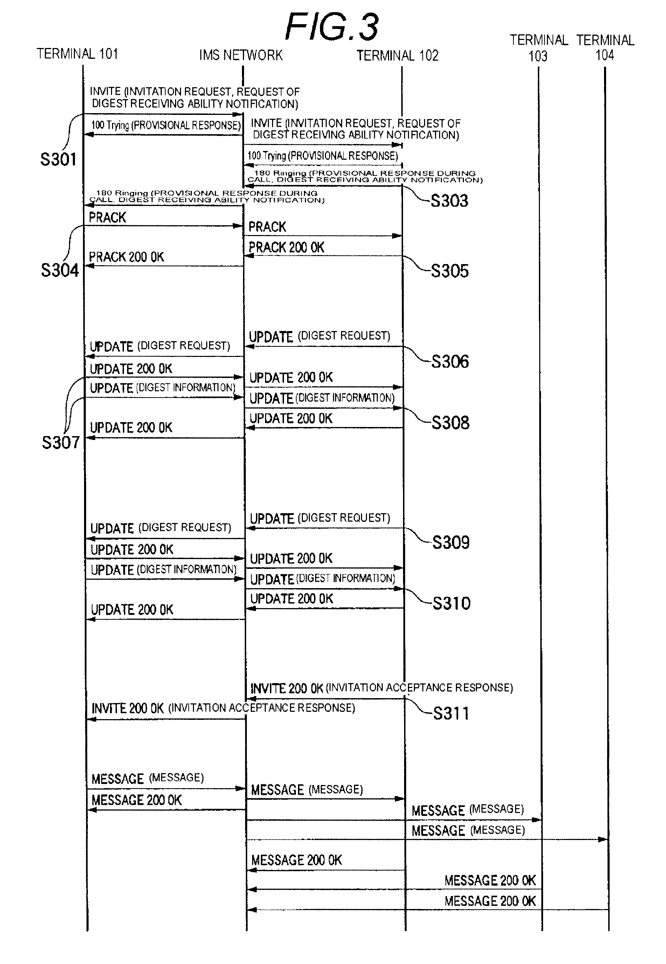

Next, a detailed sequence regarding an operation when the user of the terminal 101 invites the user of the terminal 102 to the session 110 in the communication system shown in Fig. 1 will be described using Fig. 3. In this example, a case is assumed in which an IMS network is used for communication between the terminals 101 to 104. Moreover, in Fig. 3, all described as a message transmitted and received between respective entities are assumed to be SIP (Session Initiation Protocol) messages.

If the terminal 101 receives from its own user an instruction to invite the user of the terminal 102 to a session, the terminal 101 transmits INVITE including an offer with a public URI of the user of the terminal 102 as a destination (S301 in Fig. 3). This offer is to request the terminal, which has received the offer, provide information indicating whether or not there is an ability to receive and display the digest information.

If INVITE is received, the IMS network transmits this to the terminal 102 and also returns 100 Trying to the terminal 101 (S302). The 100 Trying is read and discarded in the terminal 101. If INVITE reaches the terminal 102, the terminal 102 displays on its indicator that the invitation request has been received and also returns 180 Ringing including the answer to the offer (S303). This answer is the information indicating whether or not the terminal 102 has an ability to receive and display the digest information.

If 180 Ringing is received, the IMS network transmits this to the terminal 101. If an answer is present in the received information, the terminal 101 which received 180 Ringing transmits a PRACK message in order to approve the 180 Ringing (S304), and the terminal 102 returns 200 OK in response to this (S305).

If there is no response to the invitation request from the user of the terminal for a predetermined time, the terminal 102 transmits UPDATE including an offer (S306). This offer is equivalent to the above-described digest request. Since details of the digest request have already been described, an explanation will be omitted herein. Moreover, if the presence of the terminal 102 is set as a state where IM is not acceptable, the terminal 102 does not perform transmission of UPDATE and transmits 488 indicating that the invitation cannot be accepted as a response to INVITE.

After receiving UPDATE, the terminal 101 returns 200 OK including the answer if a digest request is included in the received UPDATE (S307). This answer is equivalent to the above-described digest information. Since details of the digest information have already been described, an explanation will be omitted herein.

After receiving a response to UPDATE, the terminal 102 displays the content (message including character strings) of the received digest information on the screen of the indicator if an answer is included in the response and it is the digest information (S308).

If the received digest information is being displayed and the user of the terminal 102 does not input a response to the invitation, the terminal 102 repeats transmission of a further digest request and additional display of the received digest information (S309, S310). Then, 200 OK or 488 is transmitted as a response to the INVITE already received when the user has input a response (S311). The case where the user instructs to accept it is 200 OK, and the case where the user refuses acceptance is 488.

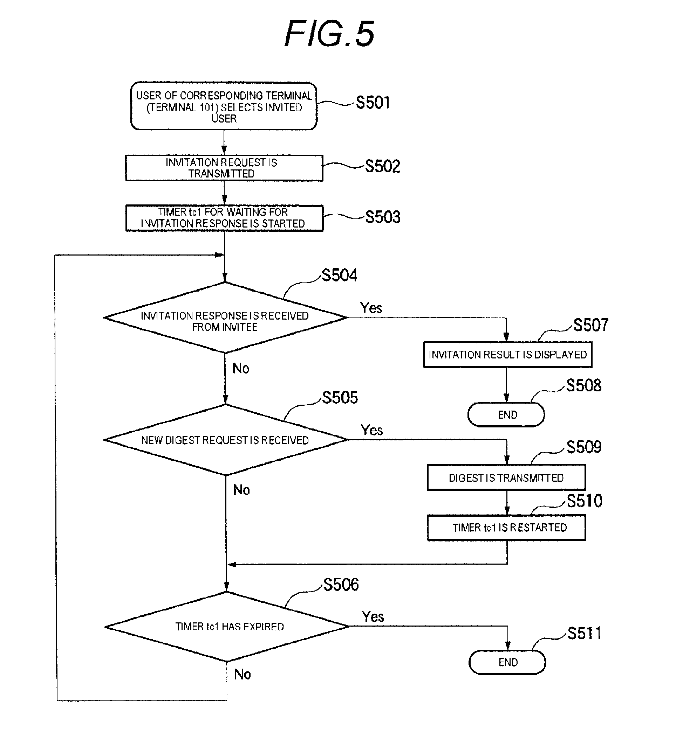

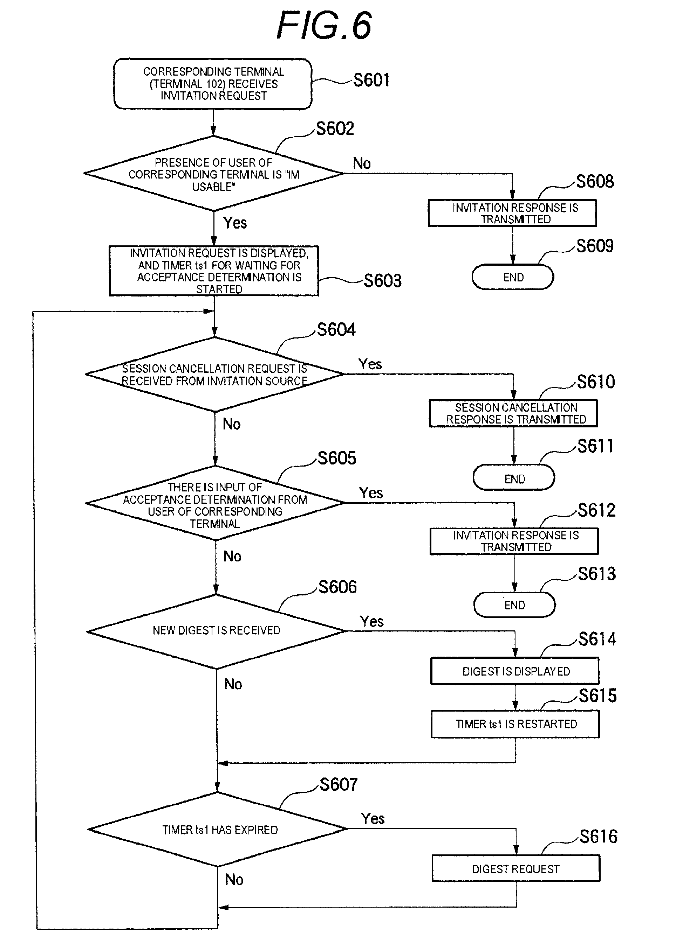

An operation of a terminal (equivalent to the terminal 101 in Fig. 3) of the invitation request side for realizing the operation shown in Fig. 3 is shown in Fig. 5, and an operation of a terminal (equivalent to the terminal 102 in Fig. 3) of the side which receives the invitation request is shown in Fig. 6.

First, an invitation process in the terminal 101 of the invitation request transmitting side will be described with reference to Fig. 5.

If the invitation request creating section 202 receives from the user input section 201 a request for newly inviting a user (of another station), the invitation request creating section 202 acquires a user name and an URI of a candidate to be invited from the contact list 203 and requests the display control section 213 to display the list of user names on the indicator 214, and the indicator 214 displays it. If the invitation request creating section 202 receives from the user input section 201 an input for designating an invited user, the invitation request creating section 202 requests the display control section 213 to display an invitation message input screen on the indicator 214. If an invitation message and a invitation request transmission are input from the user, the invitation response creating section 206 stores a request for providing the information, which indicates whether or not there is an ability to receive and display the information on an invitee, the invitation message, and the digest information, in INVITE request and transmits it to the IMS network through the signal transmitting section (S502 in Fig. 5). At the same time, an invitation response waiting timer tc1 is started (S503), and the display control section 213 is requested so that it returns to the screen before receiving an invitation request from the user.

If an SIP message from the other station is received after the signal transmitting section 204 transmitted the INVITE request, the signal receiving section 208 passes it to the received information analyzing section 209. The received information analyzing section 209 determines whether the passed information is a request or a response. If it is a response, the received information analyzing section 209 makes a determination regarding a response to which SIP message.

When the received SIP message is a response to the INVITE request already transmitted (S504), the received information analyzing section 209 requests the display control section 213 to display on the indicator 214 that a user has been added to the session if the response is a message including a status code of 400 or more, and requests the display control section 213 to display that the invitation has failed if it is not 200 OK (S507) and the invitation process ends (S508).

When the SIP message received from the other station is an UPDATE request (S505), if an offer is included in the request, the received information analyzing section 209 transmits it to the digest information creating section 210. If an offer is not included, the received information analyzing section 209 reads it and discards it. The digest information creating section 210 creates the digest information if the content of the offer is a digest request and reads it, and discards it otherwise. After completing the creation of the digest information, the digest information creating section 210 stores it in an UPDATE message and transmits it to the IMS network through the signal transmitting section 204 (S509) and also restarts the invitation response waiting timer tc1 (S510). In addition, when the terminal 101 supports a change of session information by UPDATE, the UPDATE request is also transmitted to a session information change section, which is not described in Fig. 4, and is processed herein. However, since this process is not related to the invitation process, the explanation will be omitted.

If the received SIP message is a Message request, the received information analyzing section 209 passes it to the message history holding section 212 and the display control section 213. The message history holding section 212 saves the passed message, and the display control section 213 displays the received message on the indicator 214. In addition, this process is performed independently of the invitation process.

Cases where the received SIP message is other requests or responses will be omitted because they are not relevant to the invitation process.

If the timer tc1 stops (if a predetermined time passes) before receiving a response to the INVITE request after transmission of the INVITE request, the invitation process ends. In practice, transmission and reception of CANCEL request and response are performed before the invitation process ends. Since this is general processing, the explanation will be omitted.

The terminal 101 of the invitation request transmitting side which conforms to the above-described sequence does not perform automatic invitation cancellation by timeout of a session invitation response (processes as timeout only the case where a digest request is not detected for a predetermined time) except for the case where a digest request is not received for a predetermined time. This is effective in preventing an invitation from being canceled while an invited user is deciding whether or not to accept the invitation while viewing a digest. In order to realize the same object, warning may be performed if the terminal 101 receives an input for instructing manual cancellation from a user.

Next, a process of being invited in the terminal 102 of the invitation request receiving side will be described with reference to Fig. 6.

If an SIP message from another station (invitation source) is received through the signal receiving section 208 of its own station (invitee), the received information analyzing section 209 determines whether it is a request or a response. If it is a response, the received information analyzing section 209 makes a determination regarding a response to which SIP message.

If the received SIP message is an INVITE request, the received information analyzing section 209 passes it to the invitation response creating section 206. The invitation response creating section 206 acquires the presence information of the user of the terminal from the terminal presence information holding section 205. If the presence is not in a state of being able to join the IM session (S602 in Fig. 6), a response 488 indicating an invitation refusal is transmitted to the IMS network through the signal transmitting section 204 (S608) and then the process of being invited ends (S609). If the presence is in a state of being able to join the IM session (S602), the invitation response creating section 206 requests the display control section 213 to display on the indicator 214 that an invitation has been issued and starts a timer ts1 for waiting for determination regarding whether or not the user of the terminal accepts the invitation (S603).

If an SIP message is received after the timer ts1 starts, the signal receiving section 208 passes it to the received information analyzing section 209. The received information analyzing section 209 determines whether the passed information is a request or a response. If it is a response, the received information analyzing section 209 makes a determination regarding which SIP message to respond to.

If the received SIP message is a CANCEL request (S604), the received information analyzing section 209 transmits to the invitation response creating section 206 that the invitation cancel request has been received, and the invitation response creating section 206 transmits a CANCEL response to the IMS network through the signal transmitting section 204 (S610). Then, the process of being invited ends (S611).

When the received SIP message is a response to the UPDATE request already transmitted (S606), if an answer is included in the response, the received information analyzing section 209 transmits it to the digest information analyzing section 211. If an answer is not included, the received information analyzing section 209 reads it and discards it. If the content of the answer is digest information, the digest information analyzing section 211 takes it apart into messages and passes it to the display control section 213 and also notifies the invitation response creating section 206 that the digest information has been received. Otherwise, the digest information analyzing section 211 reads it and discards it. The display control section 213 to which the message information has been passed displays it on the indicator 214 (S614), and the invitation response creating section 206, which has been notified that the digest information has been received, restarts the timer tc1 (S615). In addition, when the terminal 101 supports a change of session information by UPDATE, the UPDATE request is also transmitted to a session information change section, which is not described in Fig. 4, and is processed herein. However, since this process is not related to the invitation process, an explanation will be omitted.

After receiving the INVITE request from another station, if there is a user's input, which instructs acceptance or refusal of the invitation, from the user input section 201 of its own station (S605), the invitation response creating section 206 transmits a response according to this input to the IMS network through the signal transmitting section 204 (S612). Then, the process of being invited ends (S613).

After receiving the INVITE request from another station, if the timer ts1 stops (if a predetermined time passes) while there is no input of invitation acceptance determination through the user input section 201 from the user of its own station, the digest request is stored in the UPDATE request and transmitted to the IMS network through the signal transmitting section 204 (S616).

When the terminal 102 transmits 200 OK as a response to INVITE, participation of the terminal 102 in the session 110 is completed.

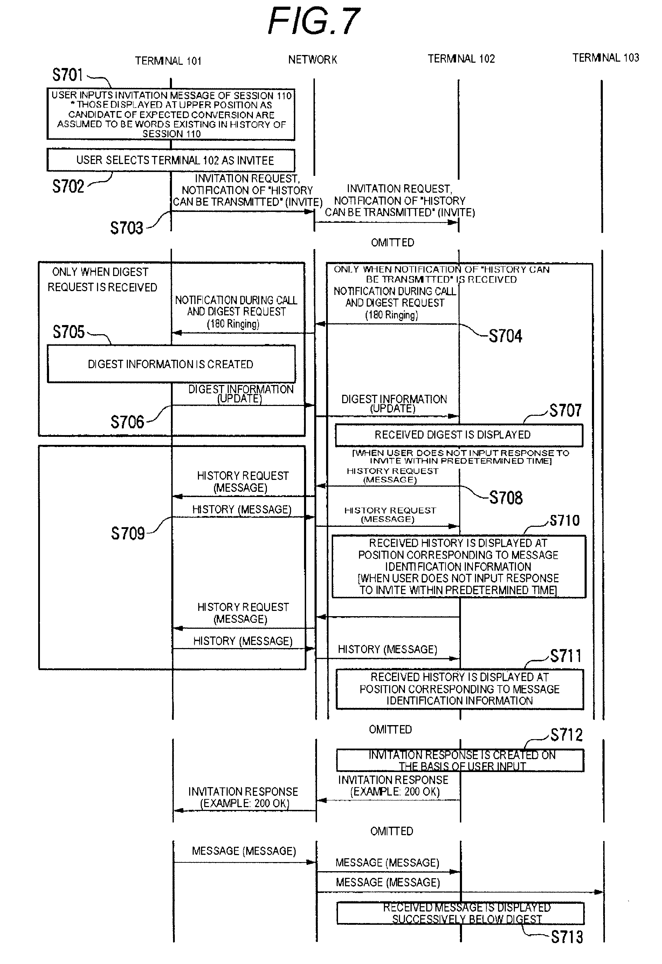

Next, the outline of operation when one terminal invites another terminal to a communication session in the communication system shown in Fig. 1 will be described with reference to Fig. 7. Fig. 7 is a sequence diagram showing the outline of operation when one terminal invites another terminal to a communication session in the communication system shown in Fig. 1. In particular, in Fig. 7, the case will be described in which an invitation source transmits a history, to which the message identification information is added, to an invitee according to a history request from the invitee.

In Fig. 7, a case is assumed in which the user of the terminal 101 invites one terminal 102, which has not joined the session 110 yet, to the session 110 in a state where the terminals 101 and 103 already participate in the session 110 of communication through which the communication content can be shared. It is needless to say that the terminal 103 other than the terminal 101 can also invite the user of the terminal 102. By this session 110, if one terminal of the terminals 101 and 103 transmits a message to the session address, this message is distributed to the terminals 101 and 103. Accordingly, the terminals 101 and 103 participating in the session 110 can share the same communication content (message).

As shown in Fig. 7, first, the user of the terminal 101 inputs an invitation message to the terminal 101 in order to invite the user of the terminal 102 to the session 110 (S701).

Then, if the user of the terminal 101 selects the terminal 102 as an invitee (S702), the terminal 101 transmits an invitation request (INVITE) to the terminal 102 through a network (S703). In this invitation request, a notification of "history can be transmitted" is included. Then, the terminal 102 receives the invitation request (INVITE) from the terminal 101 through a network.

Then, if the invitation request (INVITE) is received from the terminal 101, the terminal 102 which is at an invitee transmits "180 Ringing" indicating "being called" to the terminal 101 (S704). When a notification of "history can be transmitted" is included in INVITE, a digest request is included in "180 Ringing". Then, the terminal 101 receives "180 Ringing" and the digest request from the terminal 102.

Then, the terminal 101 creates the digest information according to the digest request received from the terminal 102 which is at an invitee (S705). The digest information created by the terminal 101 is, for example, the digest information described in the above specific examples A1 to A5.
Then, the terminal 101 transmits update (UPDATE) of media negotiation to the terminal 102 which is a transmission source of the digest request (S706). The digest information created by the terminal 101 is included in UPDATE. The reason why UPDATE is used in order to transmit the digest information is that UPDATE has a feature of being able to be transmitted before the invitation process by INVITE is completed (before 200 OK returns). Then, the terminal 102 receives the digest information created by the terminal 101.

Then, the terminal 102 displays the digest information received from the terminal 101, which is an invitation source, on its own indicator (S707).
Here, if there is no input of a response to the invitation request from the user of the terminal for a predetermined time, the terminal 102 transmits a message (MESSAGE) of a history request to the terminal 101 according to the notification of "history can be transmitted" from the terminal 101 which is an invitation source (S708).

Next, the terminal 101, which has received the history request from the terminal 102 that is at an invitee, adds the message identification information and transmits a history including the digest information to the terminal 102 (S709). In the history transmitted to the terminal 102, the message received from the terminal 102 together with the history request is included in the form of being added after the history. In addition, an operation of the terminal 101 in S709 corresponds to an operation of a terminal of an invitation source which will be described later (modification C4). Then, on the indicator of the terminal 102, the history can be displayed at the position corresponding to the message identification information (S710). In addition, an operation of the terminal 102 in S711 corresponds to an operation of a terminal of an invitee in a modification C4 which will be described later.
Moreover, if there is no input of a response to the invitation request from the user of the terminal for a predetermined time, the terminal 102 transmits a message (MESSAGE) of a history request again to the terminal 101 which is an invitation source. Then, on the indicator of the terminal 102, the history can be displayed at the position corresponding to the message identification information (S711).

Then, if the user of the terminal performs input in response to the invitation request referring to the history in S711, the terminal 102 creates and transmits an invitation response on the basis of the user's input (S712). Specifically, the terminal 102 creates "INVITE 200 OK", which indicates a response of invitation acceptance, and transmits it to the terminal 101 which is an invitation source. Thus, the process in which the terminal 102 joins the session 110 is completed.

Then, the terminal 101 which has received "INVITE 200 OK" from the terminal 102 notifies the currently participating terminal 103 including the terminal 102 of a message (MESSAGE) which tells that a new user has joined. The terminal 102 displays the received message successively below the digest information, which is included in the history already received, on its own indicator (S713).

As described above, by using the technique of the present embodiment, the user who is invited to a session can quickly obtain the information regarding the content discussed in the session without requiring the user's action before participating in the session. Accordingly, the user can decide whether or not to join the session. Moreover, in order to realize this, it is not necessary to save the history of a session on a server.

Moreover, the terminal of the invitation request transmitting side does not perform automatic invitation cancellation by timeout of a session invitation response except for the case where a digest request is not received for a predetermined time. Accordingly, it is possible to prevent an invitation from being canceled while an invited user is thinking whether or not to accept the invitation while viewing a digest.

For the above-described embodiment, various modifications described below are possible, for example.

### (Modification C1)

### [Operation of a terminal of an invitation source]

If a specific user, for whom there is no recording indicating that the user had participated in the same session as an invited user, is included in members of a session to be invited within the history of the session of the user of the terminal, it is transmitted to an invitee as the participant information indicating the specific user. In addition, a representative message of the specific user (the newest message, the longest message in the session history, or the like) may be transmitted (this may be transmitted together with the digest information or may be separately transmitted).

### [Operation of a terminal of an invitee]

If the participant information including the information regarding a specific user is received from an invitation source, it is displayed.

Accordingly, when deciding whether or not to join a session, an invited user can see whether or not a member that the invited user does not know joins the session and see the features of the member. Usually, unless a user decides whether or not to accept an invitation and responds to an invitation request within a fixed time, the inviting user is kept waiting or the session is canceled. In order to prevent this, it is important to narrow the transmitted and received information and the content that a user accesses. In this case, the information that the invited user needs can be provided with only a small amount of information rather than sending information regarding all participating members.

### (Modification C2)

### [Operation of a terminal of an invitee]

If a user of its own station does not input a response within a predetermined time after receiving an invitation request from another station, a history request including the user's pastime information (information that the user registered in advance as a profile, a word which appears frequently in web pages that the user accessed or titles of transmitted and received mails, or the like) is transmitted each time a predetermined time period passes (for example, the request content is changed each time, the request content is transmitted in the order of importance, or a synonymous word of previously transmitted information is transmitted).

### [Operation of a terminal of an invitation source]

If the history request is received from the invitee, a history matching the pastime information included in the history request is transmitted (if there is no matched information, messages before and after the transmitted digest and the transmitted history message are transmitted).

In this way, the invited user can acquire the history information that the invited user wants to know without causing unnecessary traffic before participating in a session.

### (Modification C3)

### [Operation of a terminal of an invitation source]

If a response from an invitee is not received within a predetermined time after a station transmits an invitation request, messages before and after the transmitted digest and the transmitted history message are transmitted whenever a predetermined time elapses.

In this way, the invited user can acquire further detailed information regarding the session without causing unnecessary traffic before participating in the session.

### (Modification C4)

### [Operation of a terminal of an invitation source]

When transmitting the digest information, the message identification information is transmitted together. Moreover, if a history request is received from an invitee, the requested history is transmitted. When transmitting the history, the message identification information may be transmitted together. In addition, Private-Message on a session defined in SIP/SIMPLE IM (Instant Messaging) may also be used for transmission and reception of a history. "Private-Message" is a structure of transmitting a message using an IM session to only some of the members participating in the session.

### [Operation of a terminal of an invitee]

If a message addressed to the session which has been received from the invitation source is displayed on the screen of the terminal of the invitee in the form of adding the message after a history (including a digest) and the displayed history is selected by the user (for example, the history is focused), a history request is transmitted to the invitation source together with the message identification information corresponding to the previous and following messages adjacent to the selected message (a predetermined number of messages or less may be decided. Moreover, a limitation to messages which have not been acquired may be made). If the history information is received from the invitation source, the terminal of the invitee displays it in a region on the same screen as the digest information in the order of reception of invitation sources. Moreover, in the case of focusing a selection, the following study is required. A focus message changes and accordingly, new acquisition and display of a history are not performed within a fixed period of time. The lower limit of a display interval of an additional line of a history is set, and new acquisition and display of a history are not performed if focusing is performed during a shorter time than the time.

Accordingly, the user can scroll near the desired information. Using the digest information as a root, the information can be searched for from here, the period of time until the user arrives at the desired information is short. In addition, traffic is reduced rather than acquiring the entire history.

### (Modification C5)

The following point is changed in the "modification C4". As the message identification information, a serial number corresponding to the order in which the invitation source received a message is used. The invitee is kept from acquiring a history which has already been received.

Since this prevents double acquisition of the same history information, traffic and processing can be reduced.

### (Modification C6)

The following point is changed in the "modification C4". As the message identification information, Message-ID added to a message of a session address is used. If Message-ID of a message of a session address received by a terminal of an invitee matches the message identification information of the history information received from a terminal of an invitation source, the terminal of the invitee does not display a history and does not acquire a subsequent history.

Accordingly, since it becomes possible to prevent double display of a history and history acquisition of a message transmitted to the session address after session participation, traffic or processing can be reduced.

### (Modification C7)

### [Operation of a terminal of an invitation source]

Transmission is performed by adding an invitation request or an invitation cancel request to a key (unique information). If a re-invitation request added with a key corresponding to the invitation is received from the invited user, an invitation request added with the key is automatically transmitted again.

### [Operation of a terminal of an invitee]

If a station (invitee) user instructs invitation acceptance for a session for which a cancel request of the invitation has been already received (in the case of timeout), a re-invitation request is transmitted to the invitation source. An invitation request received before or a key received together with a cancel request is added to the re-invitation request. If an invitation request including the key is received again from the transmission source after the re-invitation request is transmitted, an invitation acceptance response is automatically transmitted without notifying the user of its own station.

For example, there is a case where a terminal of an invitation source cancels an invitation by detection of timeout while an invited user is checking a digest. Even in such a case, an invitation is possible even if a user does not perform the invitation repeatedly.

While the present invention has been described in detail with reference to the specific embodiments, it is apparent to those skilled in the art that various changes and modifications may be made without departing from the spirit and scope of the present invention.

This application claims priority from Japanese Patent Application (Patent Application No. 2008-139776) filed on May. 28, 2008, the entire content of which is incorporated herein by reference.

### Industrial Applicability

The communication terminal device, the communication control method, and the communication control program of the present invention can be used, for example, when a plurality of terminals, such as mobile phones, personal digital assistants, and personal computers, are present and these can communicate with each other through a communication network. For example, they help to improve the usability when inviting a user to each session in the case of trying to share the information for each session using a protocol, such as an instant messaging service.

## Claims

1. A communication terminal device capable of communicating with one or more communication terminals, comprising:
a communication section which is adapted to transmit and receive a communication with the communication terminal;
an invitation request transmitting section which is adapted to transmit an invitation request to attend a communication session to the communication terminal through the communication section; and
a digest information transmitting section which is adapted to create digest information including a message relevant to the communication session and to transmit the created digest information to the communication terminal through the communication section when the communication section receives a digest request from the communication terminal after transmitting the invitation request.

2. The communication terminal device according to claim 1, wherein when the communication section receives the digest request a plural number of times, the digest information transmitting section transmits second digest information, which has different content from first digest information that is the already transmitted digest information, to the communication terminal through the communication section.

3. The communication terminal device according to claim 1, wherein the digest information transmitting section creates the digest information by extracting each message information item, which is included in a communication history of the communication session, on the basis of the content of an invitation message included in the invitation request.

4. The communication terminal device according to claim 1, wherein the digest information transmitting section creates the digest information on the basis of the content of a message received in the past, which is associated with the communication terminal user.

5. The communication terminal device according to claim 1, further comprising:
a session history storage section for storing history information regarding the communication session, wherein
the invitation request transmitting section compares the communication session with the session history storage section on the basis of history information regarding a communication relevant to the communication session, determines whether or not a member of the communication session and the communication terminal are included in the same session stored in the session history storage section, and transmits participant information regarding a member, who is not included, to the communication terminal through the communication section if the member is not included.

6. The communication terminal device according to claim 1, wherein if the communication section does not receive a response regarding invitation acceptance from the communication terminal of an invitee within a predetermined time period after the invitation request transmitting section transmits the invitation request, the invitation request transmitting section transmits the digest information, which is created by the digest information transmitting section, to the communication terminal through the communication section.

7. The communication terminal device according to claim 1, wherein the digest information transmitting section transmits message identification information for specifying a message, which is related to the digest information to be transmitted, in a state added to the digest information.

8. The communication terminal device according to claim 1, further comprising:
a message storage section for holding a message of a history communicated in the communication session and message identification information corresponding to the message; and
a history information transmitting section which is adapted to extract a message, which corresponds to the second message identification information added to a history information request, from messages of the history held in the message storage section and transmit the message to the communication terminal when the communication section receives the history information request from the communication terminal.

9. The communication terminal device according to claim 8, wherein the digest storage section sets a message ID, which is added to a message communicated in the session, as the message identification information.

10. A communication terminal device capable of communicating with one or more communication terminals, comprising:
a communication section which is adapted to transmit and receive a communication with the communication terminal;
an input section which is adapted to detect an input operation from a user of the communication terminal device regarding whether or not to accept an invitation request when the invitation request is received from the communication terminal; and
a digest request transmitting section which is adapted to transmit a digest request to the communication terminal through the communication section when the input section does not detect an input from the user within a predetermined time after the invitation request is received.

11. The communication terminal device according to claim 10,
wherein the communication section receives digest information corresponding to the digest request, and
the digest request transmitting section re-transmits a digest request to the communication terminal through the communication section when the input section does not detect an input from the user within a predetermined time after receiving the digest information.

12. The communication terminal device according to claim 11, wherein the digest request transmitting section determines whether or not to re-transmit the digest request according to the size or the content of digest information already received from the communication terminal.

13. The communication terminal device according to claim 10, wherein the digest request transmitting section adds a keyword, which is related to the preferences of the user of the communication terminal device, to the digest request.

14. The communication terminal device according to claim 10, further comprising:
a profile information storage section for holding profile information that is related to the preferences of the user of the communication terminal device; and
a history request transmitting section which is adapted to transmit a history request, to which the profile information held in the profile information storage section is added, through the communication section.

15. A communication control method for inviting one or more communication terminals to a communication session, comprising:
transmitting an invitation request to attend the communication session to the communication terminal;
creating digest information including a message, which is related to the communication session, when a digest request is received from the communication terminal after transmitting the invitation request; and
transmitting the created digest information to the communication terminal.

16. A communication control method for receiving an invitation to attend a communication session from a certain communication terminal, comprising:
receiving an invitation request to attend the communication session from the communication terminal;
detecting an input operation regarding whether or not to accept the received invitation request; and
transmitting a digest request to the communication terminal when the input operation is not detected within a predetermined time after the invitation request is received.

17. A program causing a computer to execute each step in the communication control method according to claim 15 or 16.
